(19) Europäisches Patentamt
European Patent Office
Office européen des brevets

(11) EP 0 844 292 B1

(12) **FASCICULE DE BREVET EUROPEEN**

(45) Date de publication et mention
de la délivrance du brevet:
**07.01.2004 Bulletin 2004/02**

(51) Int Cl.7: **C09K 3/00**, B01D 53/52,
C01B 17/05

(21) Numéro de dépôt: **97402353.3**

(22) Date de dépôt: **07.10.1997**

(54) **Composition et son utilisation pour convertir un gaz contenant de l'hydrogène sulfuré et de l'anhydride sulfureux en soufre**

Zusammensetzung und ihre Anwendung zur Umsetzung von einem Schwefelwasserstoff und Schwefeldioxid enthaltenden Gas zu Schwefel

Composition and use thereof in conversion of a gas containing hydrogen sulfide and sulfur dioxide to sulfur

(84) Etats contractants désignés:
**DE ES GB IT NL**

(30) Priorité: **25.11.1996 FR 9612477**

(43) Date de publication de la demande:
**27.05.1998 Bulletin 1998/22**

(73) Titulaire: **Institut Français du Pétrole**
**92852 Rueil-Malmaison Cedex (FR)**

(72) Inventeurs:
• **Dezael, Claude**
**78600 Maisons Laffitte (FR)**
• **Lecomte, Fabrice**
**92500 Rueil-Malmaison (FR)**

(56) Documents cités:
FR-A- 2 115 721        US-A- 2 998 304
US-A- 3 676 356        US-A- 4 056 606
US-A- 4 911 856        US-A- 5 429 684

**Description**

La présente invention a pour objet une composition, notamment pour convertir l'hydrogène sulfuré et l'anhydride sulfureux en soufre et son utilisation dans un procédé de traitement d'un effluent gazeux en contenant.

Elle concerne notamment le traitement d'effluents d'unités Claus provenant notamment d'unités d'hydrodésulfuration et de craquage catalytique.

L'arrière plan technologique est notamment illustré par les brevet US-5,429,684, US-4,911,856, US-3,676,356, US-4,056,606, US-2,998,304 et FR-2 115 721.

Le procédé Claus est largement utilisé pour récupérer du soufre élémentaire à partir de charges gazeuses contenant de l'hydrogène sulfuré ($H_2S$). Cependant, les fumées émises par les installations d'unités de type Claus renferment, même après plusieurs étages catalytiques, des quantités non négligeables de gaz acides. Il est alors nécessaire de traiter ces effluents (tail gas) d'unités Claus pour éliminer la majorité des composés toxiques de façon à respecter les normes anti-pollution. Ces normes deviennent de plus en plus sévères et il est nécessaire d'améliorer en permanence la technologie existante.

Il est connu par exemple de récupérer, à partir d'une unité Claus, environ 95 % poids de soufre présent ; un traitement de cet effluent d'unité Claus (par une unité Clauspol par exemple) permet d'atteindre par exemple 99,8 % en poids de soufre récupéré, à partir de la réaction :

$$2\ H_2S + SO_2 \rightleftarrows 3\ S + 2\ H_2O$$

qui met en oeuvre un milieu réactionnel constitué par un solvant organique et un catalyseur comprenant un sel alcalin ou alcalino-terreux d'un acide organique. La réaction s'effectue avantageusement à contre-courant dans un réacteur-contacteur et sa température est contrôlée par passage du solvant qui a été soutiré à l'extrémité inférieure du réacteur par une pompe de circulation, dans un échangeur thermique, de façon à favoriser le taux le plus élevé de conversion en soufre, tout en évitant la formation de soufre solide. Le soufre est donc récupéré sous forme liquide. Le procédé, quoique très performant, est limité par différents inconvénients liés au solvant :

celui-ci, au bout d'une période de temps variable selon la quantité d'$H_2S$ traité, commence à s'oxyder par des traces d'oxygène contenues dans le gaz.

On a constaté que cette oxydation du solvant entraînait des problèmes au niveau de la conduite de l'unité :

- consommation excessive de catalyseur pour maintenir l'activité catalytique du milieu réactionnel
- mauvaise décantation du soufre
- récupération de soufre de mauvaise qualité.

Cette oxydation semble notamment due à des traces d'oxygène contenues dans le gaz à traiter, mais surtout à la présence de traces de métaux, notamment de traces d'ions ferreux ou ferriques, provenant essentiellement de phénomènes de corrosion, qui peuvent catalyser l'oxydation du solvant, voire du système catalytique.

L'objet de l'invention concerne donc une composition catalytique permettant de remédier à ces inconvénients tout en assurant une bonne conversion de $H_2S$ et $SO_2$ en soufre.

Plus précisément, on décrit une composition comprenant :

- un solvant (A) organique de température d'ébullition, à pression atmosphérique, supérieure à 200 °C.
- un mélange (B) d'au moins un sel (S) alcalin ou alcalino-terreux d'un monoacide organique ou d'un polyacide organique agissant comme catalyseur dont au moins une valeur de la constante de dissociation (pK) est comprise entre 2,2 et 8 ; d'au moins un agent complexant (C) ; et d'eau (W), dans des proportions pondérales suivantes par rapport au mélangé B.

  S = 0,1 à 30 %
  C = 0,001 à 30 %
  W = q.s.p. 100

L'ion alcalin est choisi de préférence parmi l'ion lithium, sodium, potassium ou ammonium et est apporté avantageusement sous forme d'hydroxyde.
0 L'ion alcalino-terreux est choisi de préférence parmi les ions calcium, magnésium et est apporté avantageusement sous forme d'hydroxyde.

On opère généralement en excès d'ions alcalins ou alcalino-terreux, par exemple dans un rapport ion/acide organique compris entre 1 et 10 et de préférence en 2 et 7.

# EP 0 844 292 B1

On peut utiliser avantageusement le catalyseur (sel d'acide organique) dont au moins une valeur de la constante de dissociation (pK) est comprise entre 2,6 et 6.

De préférence, on peut obtenir les meilleurs résultats de conversion lorsque le catalyseur est choisi dans le groupe formé par l'acide formique, l'acide acétique, l'acide ascorbique, l'acide fumarique, l'acide maléique, l'acide malonique, l'acide oxalique, l'acide tartrique, l'acide benzoïque, l'acide salicylique, l'acide sulfosalicylique.

Il peut être utilisé en régime stabilisé, particulièrement, à une concentration pondérale de 1 à 5% et de façon préférée entre 0,5 à 2 % par rapport au mélange.

Selon le procédé, on peut utiliser comme agent complexant au moins un sel alcalin ou alcalino-terreux ou ferreux ou ferrique d'un acide mono- ou polyaminocarboxylique, de l'acide citrique, de l'acide salicylique ou de l'acide sulfosalicylique, un ion sulfocyanure, un ion ferrocyanure, un ion ferricyanure, un ion phosphate, un ion pyrophosphate, un ion fluorure et/ou un ion thiosulfate.

Par acide mono- ou polyaminocarboxylique, en entend un composé azoté contenant 4 à 20 atomes de carbone et de préférence :

- l'acide nitrilotriacétique, NTA
- l'acide ethylène diamine tétraacétique, EDTA
- l'acide hydroxyéthylène diamine triacétique, HEDTA
- et l'acide imidodiacétique.

On a obtenu d'excellents résultats lorsque les concentrations en agent complexant (ou chélatant) dans le mélange B sont avantageusement comprises entre 0,1 et 5 % et de préférence entre 0,01 et 1 % poids.

Selon une autre caractéristique du procédé, le mélange peut contenir en outre de 0,01 à 10 % en poids d'au moins un agent anti-oxydant et de préférence de 0,1 à 2 % poids. Les agents anti-oxydants sont en général solubles dans le mélange et le solvant organique et sont choisis habituellement parmi le propyl gallate, le terbutylhydroquinone, le 2,3 terbutyl-4-hydroxyanisole, le 3,5 diterbutyl-4-hydroxytoluène, le 2,6 di-ter-butyl-4-méthylphénol (nom commercial : Ionol), l'octyl gallate, le 2,4,5-trihydroxy-butyrophénone, l'acide nordihydroguaiarétique, le 2,6-di-ter-butyl-4-hydroxy-méthylphénol, le lauryl gallate, le 6-ethoxy-1,2 dihydro 2,2,4 trimethyquinoline (l'éthoxyquine); le thiosulfate, le chlorure, le formiate et l'oxalate de sels alcalins (sodium, potassium, ammonium en particulier).

Lorsque l'agent anti-oxydant de la composition est de type organique, sa concentration dans le mélange est de préférence comprise entre 200 et 1000 ppm poids ; alors qu'il est associé à un ion alcalin, sa concentration est d'habitude plus élevée, par exemple 0,2 à 1 % poids par rapport au mélange.

Selon une autre caractéristique du procédé, le mélange B peut contenir, en plus, de 5 à 1000 ppm d'au moins un agent mouillant susceptible de favoriser la séparation du soufre et de préférence de 10 à 500 ppm poids.

L'agent mouillant ou surfactant est avantageusement choisi dans le groupe formé par le dioctyl-sulfosuccinate de sodium, le dihexyl-sulfosuccinate de sodium, le diamyl-sulfosuccinate de sodium ; avec une concentration en ces produits plus particulièrement comprise entre 100 et 200 ppm poids, on a obtenu d'excellents résultats.

Selon une autre caractéristique du procédé, il est généralement utile d'introduire dans la composition de 5 à 10000 ppm poids d'au moins un agent anti-mousse et de préférence 10 à 500 ppm poids par rapport au mélange B. Les produits les plus avantageux peuvent être un alkylène diol-organosilane, par exemple un produit préparé à partir de di(2-hydroxy-n-propyl)éther et de méthyltrichlorosilane, ou un polyalkylène méthylpolysiloxane, ou un copolymère de silicone-glycol, ou un alcool oxyalkylé.

Le solvant A de la composition peut être choisi dans la catégorie des solvants insolubles dans l'eau ou dans celle des solvants solubles dans l'eau, l'eau étant un des produits de la réaction de SO2 et H2S :

- Parmi les solvants insolubles dans l'eau, on utilise les hydrocarbures de température d'ébullition à pression atmosphérique, supérieure à 250 °C et de préférence le dodécane, le tridécane, le naphta de points d'ébullition compris par exemple entre 225 et 335 °C.

- dans la catégorie des solvants solubles dans l'eau de température d'ébullition, à pression atmosphérique, supérieure à 200 °C, on utilise les polyols de 3 à 5 atomes de carbone, et de préférence le glycérol, le thiodiglycol et le cyclohexane diméthyl éthanol, les esters d'acide organique de 5 à 15 atomes de carbone éventuellement hydroxylés et plus particulièrement le triméthyl-pentane-diol-monoisobutyrate et le diméthyl-adipate, les éthers de glycol de 5 à 15 atomes de carbone et avantageusement le butoxytriglycol, l'éthoxytriglycol, le diethylène glycol butyléther, l'éthylène glycol phényléther, le terphényl éthylène glycol monobenzyléther, l'éthylène glycol butyl-phényl éther, le diéthylène glycol dibutyléther, le tétra éthylène glycol diméthyléther ; le propylène n-butyl éther, le dipropylène n-butyl éther ; le tripropylène n-butyl éther ; le diéthylène glycol, le triéthylène glycol et le polyéthylène glycol de masse moléculaire 200, 300, 400 ou 600.

En règle générale, dans la composition, le mélange B représente 0,001 à 10 % poids du solvant A. Avantageusement il est dans une proportion correspondant à une valeur comprise entre 100 ppm et 5000 ppm et de préférence entre 200 et 1000 ppm (partie par million).

L'invention concerne aussi l'utilisation de la composition, notamment dans un procédé d'élimination d'hydrogène sulfuré et d'anhydride sulfureux contenus dans un effluent gazeux.

La composition est habituellement utilisée dans une proportion de 1 à 40 % volume par rapport au dit effluent gazeux soufré, et de préférence dans une proportion de 3 à 30 % volume

$$\left( \frac{\text{volume liquide de la composition x 100}}{\text{volume de gaz} \ + \ \text{volume liquide de la composition}} \right)$$

Elle est le plus souvent mise en contact avec cet effluent à une température comprise entre 20 et 150 $^\circ$C et de préférence entre 60 et 130°C.

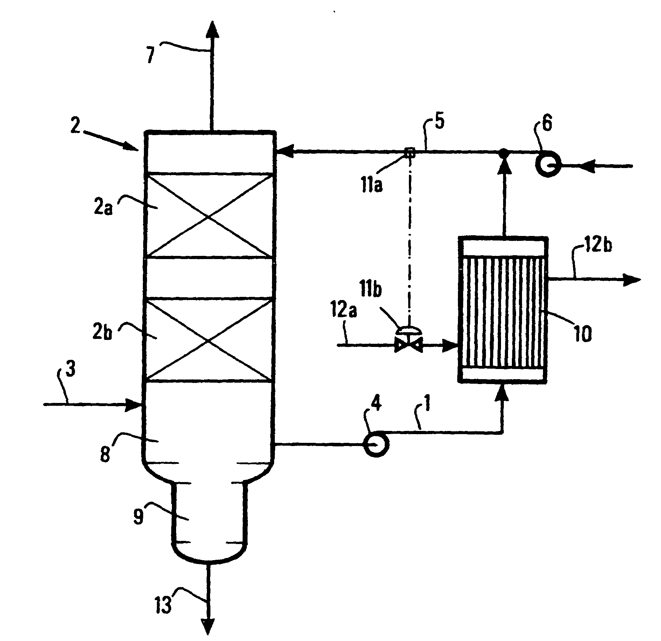

Les avantages de la composition et de sa mise en oeuvre dans un procédé de traitement d'un effluent gazeux contenant H2S et SO2 apparaîtront dans les exemples qui suivent, accompagnés de la figure illustrant un mode de mise en oeuvre de ce procédé dans un dispositif conventionnel.

Exemple 1 (figure)

On introduit, par une ligne (3) un gaz d'unité Claus, contenant $H_2S$ et $SO_2$, dont le débit est de 12300 Nm$^3$/h, dans un réacteur-contacteur constitué d'une colonne (2) contenant deux lits de garnissage (2a et 2b) et on le met en contact à 125 $^\circ$C à contre-courant avec un solvant organique introduit en tête de réacteur par une ligne (1) et une pompe (4). Le solvant est recyclé entre le haut et le bas du réacteur par ladite ligne et ladite pompe à un débit de 500 m$^3$/h à travers un échangeur de chaleur (10) contrôlé et régulé en température par un système de mesure contrôle (11a) et (11b) permettant d'injecter de l'eau chaude par la ligne (12a) et de l'évacuer par la ligne (12b). La température du solvant recyclé est de 123 $^\circ$C.

Le solvant organique utilisé est un polyéthylène glycol de masse moléculaire 400.

Le catalyseur soluble, injecté en continu dans le solvant, est constitué d'une solution aqueuse de salicylate de sodium à une concentration de 3 % poids, de soude à une concentration de 6,6 % poids et d'eau à une concentration de 90,4 % poids. Il est injecté dans la ligne de recirculation (1) grâce à la ligne (5) et à la pompe (6). Le débit d'injection moyen de catalyseur et d'eau pour maintenir la concentration désirée en catalyseur dans le solvant est de 8,5 l/h.

Le garnissage utilisé dans l'exemple est constitué de 2 lits de selles "Intalox" en céramique de surface spécifique de 250 m$^2$/m$^3$ et ayant la propriété de retenir les faibles quantités de sels de sodium formés lors de la réaction.

Le gaz traité sort en tête du réacteur par la ligne (7) et est envoyé vers un incinérateur.

Le soufre produit dans le réacteur suivant la réaction :

$$2\,H_2S + SO_2 \rightleftarrows 3\,S + 2\,H_2O$$

est séparé dans la zone (9), tandis que le solvant saturé en soufre à la température du réacteur dans la zone (8), est recyclé en tête du réacteur par la pompe (4).

On soutire le soufre formé par la ligne (13) en fond de réacteur.

On mesure les quantités de $H_2S$ et de $SO_2$ à l'entrée (ligne 3) et à la sortie (ligne 7) du réacteur afin de calculer le rendement de réaction selon la formule suivante :

$$\frac{\text{\% composés soufrés entrée - \% composés soufrés sortie) x 100}}{\text{(\% composés soufrés entrée)}}$$

En début de fonctionnement de l'unité, c'est-à-dire durant les 3 premiers mois de fonctionnement et avec les conditions précisées auparavant et notamment une injection de catalyseur de 8,5 l/h, le rendement en composés soufrés de l'unité est de 92,88 %.

Le soufre produit est brillant et de très bonne qualité.

Après ces 3 mois d'essai, bien que le rendement de l'unité soit toujours de 92,88 %, on constate que la couleur du soufre passe du jaune brillant au brun clair, sa couleur en fonction du temps augmente vers une couleur de plus en plus foncée. L'analyse, par une méthode spectrométrique par infra-rouge, montre la présence dans le solvant de produits oxydés du polyéthylène glycol. A l'interface solvant-soufre, on constate la présence de traces de sulfure de fer. On a pu observer après un fonctionnement de plus d'un an, une décantation plus difficile du soufre due à l'accumulation de ces produits.

Exemple 2 selon l'invention (catalyseur + complexant)

On remplace la composition catalytique de l'exemple 1 par une composition selon l'invention dont le mélange B contient :

- acide salicylique : 2,7 % poids
- acide nitrilotriacétique : 0,3 % poids
- sodium hydroxyde : 6,6 % poids
- eau q.s.p. 100

La quantité d'acide nitrilotriacétique en tant qu'agent complexant a été ajoutée de façon que la quantité totale d'acides (salicylique et nitrilotriacétique, susceptible d'avoir une activité catalytique sensiblement la même que celle de l'exemple 1.
Après 3 mois de fonctionnement de l'unité, le rendement en composés soufrés, calculé selon la formule de l'exemple 1 est de 94,5 %.
La décantation du soufre s'effectue sensiblement comme dans l'exemple 1 et la hauteur de l'interface est sensiblement la même.
Le soufre obtenu est de couleur jaune. On ne relève pas, par ailleurs, de traces de sulfure de fer à l'interface du solvant et du soufre.
L'analyse du solvant par spectrométrie infra-rouge ne relève pas la présence de produits oxydés.
Après 6 mois de fonctionnement de l'unité, le rendement en composés soufrés reste constant, le soufre récupéré est jaune et l'analyse ne révèle pas de produits oxydés dans le solvant.

Exemple 3 (selon l'invention)

On remplace la composition catalytique de l'exemple 2 par la composition suivante selon l'invention, toutes les autres conditions de mise en oeuvre étant conformes à celles de l'exemple 1 :

- acide salicylique : 2,7 % poids
- acide nitrilotriacétique : 0,3 % poids
- sodium hydroxyde : 6,6 % poids
- N,N'-di-sec-butylphénol : 0,05 % poids
- polyalkylène méthylpolysiloxane : 0,01 % poids
- eau : q.s.p. 100

Après 3 mois de fonctionnement de l'unité, le rendement en composés soufrés demeure sensiblement le même que celui de l'exemple 2. La couleur du soufre est jaune. La hauteur de l'interface de la zone de décantation représente environ 10 % de la hauteur de celle correspondant à l'exemple 2.
L'analyse du solvant par spectrométrie infra-rouge indique qu'il ne contient pas de produits oxydés. L'interface soufre-solvant ne présente pas de sulfure de fer.
Après 6 mois de fonctionnement, l'ensemble de ces résultats est maintenu.

Exemple 4 (selon l'invention)

On reprend les conditions de l'exemple 3 mais on remplace l'acide nitrilotriacétique par du ferricyanure de sodium, avec les mêmes proportions pondérales. On observe sensiblement les mêmes résultats que ceux de l'exemple 3.

**Revendications**

1. Composition catalytique utilisable pour convertir l'hydrogène sulfuré et l'anhydride sulfureux en soufre, comprenant :

- un solvant A organique de température d'ébullition à pression atmosphérique, supérieure à 200 °C,
- un mélange B d'au moins un sel (S) alcalin ou alcalino-terreux d'un monoacide organique ou d'un polyacide organique dont au moins une valeur de la constante de dissociation (pK) est comprise entre 2,2 et 8 ; d'au moins un agent complexant (C) ; et d'eau (W), dans les conditions pondérales suivantes :

S = 0,1 à 30 %
C = 0,001 à 30 %
W = q.s.p. 100

2. Composition selon la revendication 1 dans laquelle le mélange B contient en outre de 0,01 à 10 % en poids d'au moins un agent anti-oxydant et de préférence de 0,1 à 2 % poids.

3. Composition selon la revendication 1 ou 2 dans laquelle le mélange B contient en outre de 5 à 1000 ppm poids d'au moins un agent mouillant susceptible de favoriser la séparation du soufre et de préférence 10 à 500 ppm poids.

4. Composition selon l'une des revendications 1 à 3 dans laquelle le mélange B contient en outre de 5 à 10 000 ppm poids d'au moins un agent anti-mousse et de préférence 10 à 500 ppm poids.

5. Composition selon l'une des revendications 1 à 4 dans laquelle le mélange B est dans une proportion de 0,001 à 10 % poids par rapport au solvant et de préférence de 0,02 à 0,1 %.

6. Composition selon l'une des revendications 1 à 5, dans laquelle le monoacide organique ou le polyacide organique est choisi dans le groupe formé par l'acide formique, l'acide acétique, l'acide ascorbique, l'acide fumarique, l'acide maléique, l'acide malonique, l'acide oxalique, l'acide tartrique, l'acide benzoïque, l'acide salicylique et l'acide sulfosalicylique.

7. Composition selon l'une des revendications 1 à 6, dans lequel l'agent complexant est au moins un sel alcalin alcalino-terreux, ferreux ou ferrique d'un acide mono ou polyaminocarboxylique, de l'acide citrique, de l'acide salicylique ou de l'acide sulfosalicylique, un ion sulfocyanure, un ion ferrocyanure, un ion ferricyanure, un ion phosphate, un ion pyrophosphate, un ion fluorure et/ou un ion thiosulfate.

8. Composition selon l'une des revendications 1 à 7, dans laquelle le solvant organique est un dodécane, un tridécane ou un naphta.

9. Composition selon l'une des revendications 1 à 7, dans laquelle le solvant est un polyol de 3 à 15 atomes de carbone, un ester d'acide de 5 à 15 atomes de carbone éventuellement hydroxylé, un éther de glycol de 5 à 15 atomes de carbone, le propylène n-butyléther, le dipropylène n-butyléther, le tripropylène n-butyléther, le diéthylène glycol, le triéthylène glycol et le polyéthylène glycol de masse moléculaire 200, 300, 400 ou 600.

10. Composition selon l'une des revendications 1 à 9, dans laquelle le sel S est à une concentration pondérale de 0,5 à 2 % par rapport au mélange.

11. Utilisation d'une composition selon l'une des revendications 1 à 10, dans un procédé d'élimination d'hydrogène sulfuré et d'anhydride sulfureux contenus dans un effluent gazeux.

12. Utilisation selon la revendication 11, dans laquelle ladite composition est utilisée dans une proportion de 1 à 40 % par rapport audit effluent gazeux et de préférence entre 3 à 30 % en volume.

13. Utilisation selon la revendication 11 ou 12, dans laquelle ladite composition est mise en contact avec l'effluent gazeux à une température comprise entre 20 et 150 °C, de préférence entre 60 et 130 °C.

14. Utilisation selon l'une des revendications 11 à 13, dans laquelle l'effluent gazeux est un gaz de queue de Claus.

**Claims**

1. A catalytic composition for converting hydrogen sulfide and sulphur dioxide to sulphur comprising:

- an organic solvent A with a boiling point of more than 200°C at atmospheric pressure;
- a mixture B of at least one alkaline or alkaline-earth salt (S) of an organic monoacid or an organic polyacid wherein at least one dissociation constant value (pK) is in the range 2.2 to 8; at least one complexing agent (C); and water (W), in the following proportions by weight:

    S = 0.1% to 30%;
    C = 0.001 % to 30%;
    W = qs 100.

2. A composition according to claim 1, in which mixture B further contains 0.01% to 10% by weight of at least one anti-oxidant, preferably 0.1% to 2% by weight.

3. A composition according to claim 1 or claim 2, in which mixture B further contains 5 to 1000 ppm by weight of at least one wetting agent which encourages separation of sulphur, preferably 10 to 500 ppm by weight.

4. A composition according to any one of claims 1 to 3, in which mixture B further contains 5 to 10000 ppm by weight of at least one anti-foaming agent, preferably 10 to 500 ppm by weight.

5. A composition according to any one of claims 1 to 4, in which mixture B is in a proportion of 0.001% to 10% by weight with respect to the solvent, preferably 0.02% to 0.1%.

6. A composition according to any one of claims 1 to 5, in which the organic monoacid or organic polyacid is selected from the group formed by formic acid, acetic acid, ascorbic acid, fumaric acid, maleic acid, malonic acid, oxalic acid, tartaric acid, benzoic acid, salicylic acid and sulphosalicylic acid.

7. A composition according to any one of claims 1 to 6, in which the complexing agent is at least one alkaline or alkaline-earth salt or a ferrous or ferric salt of a mono- or poly-aminocarboxylic acid, citric acid, salicylic acid or sulphosalicylic acid, a sulphocyanide ion, a ferrocyanide ion, a ferricyanide ion, a phosphate ion, a pyrophosphate ion, a fluoride ion and/or a thiosulphate ion.

8. A composition according to any one of claims 1 to 7, in which the organic solvent is a dodecane, a tridecane or a naphtha.

9. A composition according to any one of claims 1 to 7, in which the solvent is a polyol containing 3 to 15 carbon atoms, an ester of an acid containing 5 to 15 carbon atoms which may be hydroxylated, an ether of a glycol containing 5 to 15 carbon atoms, propylene n-butyl ether, dipropylene n-butyl ether, tripropylene n-butyl ether, diethylene glycol, triethylene glycol and polyethylene glycol with a molecular mass of 200, 300, 400 or 600.

10. A composition according to any one of claims 1 to 9, in which salt S is at a concentration of 0.5% to 2% by weight with respect to the mixture.

11. Use of a composition according to any one of claims 1 to 10, in a process for eliminating hydrogen sulphide and sulphur dioxide contained in a gaseous effluent.

12. Use according to claim 11, in which said composition is used in a proportion of 1% to 40% with respect to the sulphur-containing gaseous effluent, preferably in a proportion of 3% to 30% by volume.

13. Use according to claim 11 or claim 12, in which said composition is brought into contact with the gaseous effluent at a temperature which is in the range 20°C to 150°C, preferably in the range 60°C to 130°C.

14. Use according to any one of claims 11 to 13, in which the gaseous effluent is a Claus tail gas.

**Patentansprüche**

1. Katalytische Zusammensetzung, verwendbar zum Umwandeln von Schwefelwasserstoff und Schwefeldioxid in Schwefel, umfassend:

- ein organisches Lösungsmittel A mit einer Siedetemperatur bei atmosphärischem Druck von über 200 °C,

- eine Mischung B aus mindestens einem Alkali- oder Erdalkalisalz (S) einer einbasischen organischen Säure oder einer mehrbasischen organischen Säure, wovon mindestens ein Wert der Dissoziationskonstante (pK) zwischen 2,2 und 8 liegt; aus mindestens einem komplexbildenden Stoff (C); und Wasser (W), in den folgenden Gewichtsverhältnissen:

  S = 0,1 bis 30 %
  C = 0,001 bis 30 %
  W = ad 100

2. Zusammensetzung nach Anspruch 1, wobei die Mischung B außerdem 0,01 bis 10 Gewichts-% mindestens eines Antioxidationsmittels enthält, und bevorzugt 0,1 bis 2 Gewichts-%.

3. Zusammensetzung nach Anspruch 1 oder 2, wobei die Mischung B außerdem 5 bis 1000 Gewichts-ppm mindestens eines Netzmittels enthält, das geeignet ist, die Trennung des Schwefels zu begünstigen, und bevorzugt 10 bis 500 Gewichts-ppm.

4. Zusammensetzung nach einem der Ansprüche 1 bis 3, wobei die Mischung B außerdem 5 bis 10 000 Gewichts-ppm mindestens eines Antischaummittels enthält, und bevorzugt 10 bis 500 Gewichts-ppm.

5. Zusammensetzung nach einem der Ansprüche 1 bis 4, wobei die Mischung B relativ zum Lösungsmittel in einem Verhältnis von 0,001 bis 10 Gewichts-% vorliegt, bevorzugt von 0,02 bis 0,1 %.

6. Zusammensetzung nach einem der Ansprüche 1 bis 5, wobei die einbasische organische Säure oder die mehrbasische organische Säure aus der Gruppe gewählt wird, die durch Ameisensäure, Essigsäure, Ascorbinsäure, Fumarsäure, Maleinsäure, Malonsäure, Oxalsäure, Weinsäure, Benzoesäure, Salicylsäure und Sulfosalicylsäure gebildet wird.

7. Zusammensetzung nach einem der Ansprüche 1 bis 6, wobei der komplexbildende Stoff mindestens ein Alkali-, Erdalkali-, Eisen(II)- oder Eisen(III)-Salz einer Mono- oder Polyaminocarbonsäure, der Zitronensäure, der Salicylsäure oder der Sulfosalicylsäure ist, ein Sulfocyanidion, ein Ferrocyanidion, ein Ferricyanidion, ein Phosphation, ein Pyrophosphation, ein Fluoridion und/oder ein Thiosulfation ist.

8. Zusammensetzung nach einem der Ansprüche 1 bis 7, wobei das organische Lösungsmittel ein Dodecan, ein Tridecan oder ein Naphta ist.

9. Zusammensetzung nach einem der Ansprüche 1 bis 7, wobei das Lösungsmittel ein Polyol mit 3 bis 15 Kohlenstoffatomen, ein Säureester mit 5 bis 15 eventuell hydroxylhaltigen Kohlenstoffatomen, ein Glykolether mit 5 bis 15 Kohlenstoffatomen, Propylen-N-Butylether, Dipropylen-N-Butylether, Tripropylen-N-Butylether, Diethylenglykol, Triethylenglykol und Polyethylenglykol mit einer Molekülmasse von 200, 300, 400 oder 600 ist.

10. Zusammensetzung nach einem der Ansprüche 1 bis 9, wobei das Salz S relativ zur Mischung in eine Gewichtskonzentration von 0,5 bis 2 % vorliegt.

11. Verwendung einer Zusammensetzung nach einem der Ansprüche 1 bis 10 in einem Verfahren zur Beseitigung des Schwefelwasserstoffs und des Schwefeldioxids, die in einem Abgas enthalten sind.

12. Verwendung nach Anspruch 11, wobei diese Zusammensetzung relativ zu diesem Abgas in einem Verhältnis von 1 bis 40 % verwendet wird, bevorzugt zwischen 3 und 30 Volumen-%.

13. Verwendung nach Anspruch 11 oder 12, wobei diese Zusammensetzung bei einer Temperatur zwischen 20 und 150 °C mit dem Abgas in Kontakt gebracht wird, bevorzugt zwischen 60 und 130 °C.

14. Verwendung nach einem der Ansprüche 11 bis 13, wobei das Abgas ein Claus-Endgas ist.